Europäisches Patentamt

European Patent Office

Office européen des brevets

(19)

(11) **EP 1 229 681 A1**

(12) ## DEMANDE DE BREVET EUROPEEN

(43) Date de publication:
**07.08.2002 Bulletin 2002/32**

(51) Int Cl.$^7$: **H04L 1/06**

(21) Numéro de dépôt: **02364005.5**

(22) Date de dépôt: **05.02.2002**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **06.02.2001 FR 0101570**

(71) Demandeur: **Sacet SA**
**35170 Bruz (FR)**

(72) Inventeurs:
- **Galliou, Sandra**
  **35131 Chartres de Bretagne (FR)**
- **Belfiore, Jean-Claude**
  **75013 Paris (FR)**
- **Testard, Marc**
  **56350 St Vincent sur Oust (FR)**

(54) **Procédé de construction de codes espace-temps pour les signaux modulés en amplitude et phase**

(57) Le procédé consiste:

- à construire 12 un élément β comme résultat de la combinaison linéaire de n$^2$ symboles de la constellation de signaux à transmettre,
- et à construire (13,14) une matrice G(β) du code espace-temps associée à l'élément β comme étant le produit de Hadamard d'une matrice A(β) par une matrice inversible B de sorte que chaque ligne i (respectivement la colonne j) de la matrice G(β) contient les n signaux à transmettre séparément par chacune des antennes en émission à chaque instant t=i et la colonne j (respectivement i) contient les signaux transmis par une antenne j (respectivement i) de l'instant t=1 à l'instant t=n.

Application: Système de transmissions numérique de l'information.

$n^2$ symboles indépendants

ETAPE 1
Construction de l'élément $\beta$ de l'anneau des entiers algébriques $O_L$ du corps de nombres algébriques $L$, comme combinaison linéaire des $n^2$ symboles

12

ETAPE 2
Construction de la matrice $A(\beta)$, à $n$ lignes et $n$ colonnes, telle que :
$$A_{ij}(\beta) = \sigma_{ij}(\beta)$$

13

ETAPE 3
Construction de la matrice $G(\beta)$ du code espace-temps :
$$G(\beta) = A(\beta) \odot B$$
avec $B$ matrice carrée inversible, à $n$ lignes et $n$ colonnes

14

FIG-3-

EP 1 229 681 A1

# Description

La présente invention concerne un procédé générique de codage espace-temps algébrique pour un système de communication numérique comportant des antennes multiples en émission et en réception, pour toute configuration d'antennes et pour toute efficacité.

Un codage espace-temps est un procédé de transmission de symboles codés ou non par des antennes multiples. Le qualificatif algébrique appliqué aux codes espace-temps de l'invention caractérise la construction proposée par l'invention pour ces codes espace-temps.

L'efficacité est le nombre de symboles indépendants, appartenant à la constellation choisie, qui sont transmis à chaque instant d'émission par les antennes multiples en émission. L'efficacité d'un système de communication à antennes multiples en émission et en réception est dite maximale si le nombre de symboles indépendants transmis à chaque instant d'émission par le système de communication à antennes multiples en émission et en réception est égal au nombre d'antennes en émission.

Une constellation désigne un ensemble fini de points appelés symboles.

La présente invention s'applique notamment à la réalisation de systèmes de communication radioélectriques numériques sans fil pour des applications à haut débit sur canal à évanouissements.

L'intérêt des systèmes de communication numériques sans fil à antennes multiples en émission et en réception est d'offrir un potentiel en efficacité nettement supérieur à celui d'un système de communication possédant une seule antenne d'émission, d'offrir un ordre de diversité spatiale égal au nombre d'antennes en émission multiplié par le nombre d'antennes en réception, par rapport à une diversité spatiale d'ordre un pour un système de communication possédant une seule antenne en émission et une seule antenne en réception. Il faut préciser que la diversité spatiale correspond au nombre de trajets décorrélés, au sens des communications numériques, que peut prendre un signal entre la partie émission et la partie réception d'un système de communication. Par conséquent, à puissance totale rayonnée constante, les performances d'un système de communication à antennes multiples en émission et en réception, performances évaluées en terme de taux d'erreurs pour un rapport signal à bruit donné, sont largement améliorées par rapport à un système de communication possédant une seule antenne en émission et une seule antenne en réception. D'autre part, cela signifie que, à puissance totale rayonnée constante, par rapport à un système de communication possédant une seule antenne en émission et une seule antenne en réception, chaque antenne en émission du système de communication à antennes multiples en émission et en réception rayonne une puissance moindre et nécessite donc un amplificateur de puissance moins coûteux puisque une zone de fonctionnement réduite est suffisante.

Un article intitulé "Detection algorithm and initial laboratory results using V-BLAST space-time communication architecture", publié par MM. Golden, Foschini, Valenzuela et Wolniansky dans la revue Electronic Letters, Janvier 1999, montre la faisabilité d'un système de communication à antennes multiples en émission et en réception et les gains importants en terme d'efficacité offerts par un tel système. L'inconvénient majeur de ce système, appelé BLAST pour Bell Labs Layered Space Time Architecture, est de ne pas exploiter la diversité spatiale en émission inhérente au système de communication. Cet inconvénient se traduit directement au niveau des performances du système de communication, évaluées en terme de taux d'erreur pour un rapport signal à bruit donné.

Pour pallier cet inconvénient, l'invention propose d'utiliser un codage espace-temps dont le rôle consiste à transformer la diversité spatiale en émission du système à antennes multiples en émission et en réception en diversité temporelle. L'utilisation d'un codage espace-temps apporte au système de communication à la fois un gain de codage et un gain de diversité spatiale, qui déterminent directement les performances du système, en terme de taux d'erreur en fonction du rapport signal à bruit.

Différents schémas de codes espace-temps ont été publiés. Dans l'article intitulé "Space-time codes for high data rate wireless communication : Performance criterion and code construction" publié dans la revue IEEE Transactions on Information Theory, Mars 1998, MM. Tarokh, Seshadri et Calderbank proposent une méthode de construction de codes espace-temps en treillis. L'inconvénient majeur de ce type de solution apparaît au niveau de l'algorithme de décodage dont la complexité augmente de façon exponentielle avec le nombre d'états du code. Dans un article intitulé "A simple transmit diversity technique for wireless communications" publié par M. Alamouti dans la revue IEEE Journal on Selected Areas in Communications, 1998, et dans un article intitulé "Space-time block codes from orthogonal designs" publié par MM. Tarokh, Jafarkhani et Calderbank dans la revue IEEE Transactions on Information Theory, Juillet 1999, les auteurs proposent des codes espace-temps en blocs, qui présentent l'intérêt d'un décodage très simple mais ont l'inconvénient de ne pas être génériques pour un nombre quelconque d'antennes en émission.

Un inconvénient commun à ces deux solutions de codes espace-temps réside dans l'efficacité offerte, qui n'est pas maximale au sens où le nombre de symboles indépendants émis, à chaque instant d'émission, par les antennes multiples en émission est inférieur au nombre d'antennes multiples en émission, c'est-à-dire qu'un même symbole est transmis plusieurs fois.

Des codes espace-temps en blocs sont également proposés dans l'article intitulé "High data rate codes that are linear in space and time", écrit par MM. Hassibi et Hochwald disponible à l'adresse http://mars.bell-labs.com. Cette dernière solution permet d'atteindre des efficacités supérieures à celles des solutions citées ci-dessus, mais d'une part l'efficacité n'est pas maximale, d'autre part la construction ne permet pas d'apporter un gain de diversité spatiale maximale au système. Enfin, la construction n'est pas générique et dépend du nombre d'antennes du système de communication à antennes multiples en émission et en réception.

Le but de l'invention est de pallier les inconvénients des solutions citées ci-dessus en proposant une construction de codes espace-temps algébriques qui est générique, tout en possédant une efficacité maximale.

A cet effet, l'invention a pour objet, un procédé de construction de codes espaces-temps pour la transmission de n signaux appartenant à une constellation de signaux modulés en amplitude et en phase, chaque signal de la constellation étant représentatif d'un symbole à transmettre, au moyen d'un système de communication à antennes multiples comprenant n antennes d'émission et n antennes de réception le nombre d'antennes d'émission étant égale au nombre d'antennes de réception, caractérisé en ce qu'il consiste:

- à sélectionner les corps de nombres adaptés pour la dimension du système considéré, c'est-à-dire pour le nombre n d'antennes en émission du système de communication à antennes multiples,
- à construire l'élément $\beta$ de l'anneau des entiers algébriques $O_L$ du corps des nombres algébriques L comme combinaison linéaire, dans une base entière du corps de nombres algébriques L dans le corps des complexes rationnels Q[i], des $n^2$ symboles, indépendants, de la constellation à transmettre sur n instants d'émission par les n antennes d'émission du système de communication à antennes multiples,
- à construire les $n^2$ conjugués dans Q[i] de l'élément $\beta$, appartenant à l'anneau des entiers algébriques $O_L$ du corps de nombres algébriques L, comme images respectives par chacun des $n^2$ plongements du corps de nombres algébriques L dans le corps des complexes rationnels Q[i] de l'élément $\beta$, appartenant à l'anneau des entiers algébriques $O_L$ du corps de nombres algébriques L,
- à construire une matrice $A(\beta)$, à n lignes et n colonnes, tels que le coefficient $A_{ij}(\beta)$, pour tout i allant de 1 à n et pour tout j allant de 1 à n, soit l'image par le plongement noté $\sigma_{ij}$ du corps de nombres algébriques L dans le corps des complexes rationnels Q[i] de l'élément $\beta$ appartenant à l'anneau des entiers algébriques $O_L$ du corps de nombres algébriques L, où $\sigma_{ij}$ désigne la composition des applications $\sigma_i$ et $\sigma_j$, où l'on note respectivement par $\sigma_j$, pour tout j allant de 1 à n, les n K-isomorphismes du corps de nombres algébriques L dans le corps de nombres algébriques K et $\sigma_i$, pour tout i allant de 1 à n, les Q[i]-isomorphismes du corps de nombres algébriques K dans le corps des complexes rationnels Q[i],

- à choisir une matrice B, à n lignes et n colonnes, inversible,
- et à construire la matrice du code espace-temps G $(\beta)$ en effectuant le produit de Hadamard de la matrice $A(\beta)$ par la matrice inversible B.

La construction de codes espace-temps en application du procédé selon l'invention a pour avantage qu'elle permet d'apporter au système de communication à antennes multiples un gain en diversité spatiale maximal. L'utilisation selon l'invention de codes espace-temps linéaires permet d'induire un décodage de complexité raisonnable.

Le procédé de construction de codes espace-temps selon l'invention présente aussi l'avantage d'être générique quelque soit le nombre d'antennes du système à antennes multiples en émission et en réception, linéaires afin de simplifier le décodage, apportant une efficacité maximale au système de communication, et exploitant la diversité spatiale maximale inhérente au système de communication. Le procédé de l'invention est également applicable pour la construction de codes espace-temps offrant des efficacités inférieures à l'efficacité maximale inhérente au système de communication à antennes multiples en émission et en réception et exploitant la diversité spatiale maximale inhérente au système à antennes multiples en émission et en réception.

Enfin, le procédé selon l'invention peut être appliqué de manière non exhaustive à toutes les constellations de modulations d'amplitude en quadrature MAQ, quelque soit leur nombre d'états, et aux constellations des modulations de phase MDP à 2, 4 et 8 états...

D'autres caractéristiques et avantages de l'invention apparaîtront dans la description qui suit faite en regard des dessins annexés qui représentent:

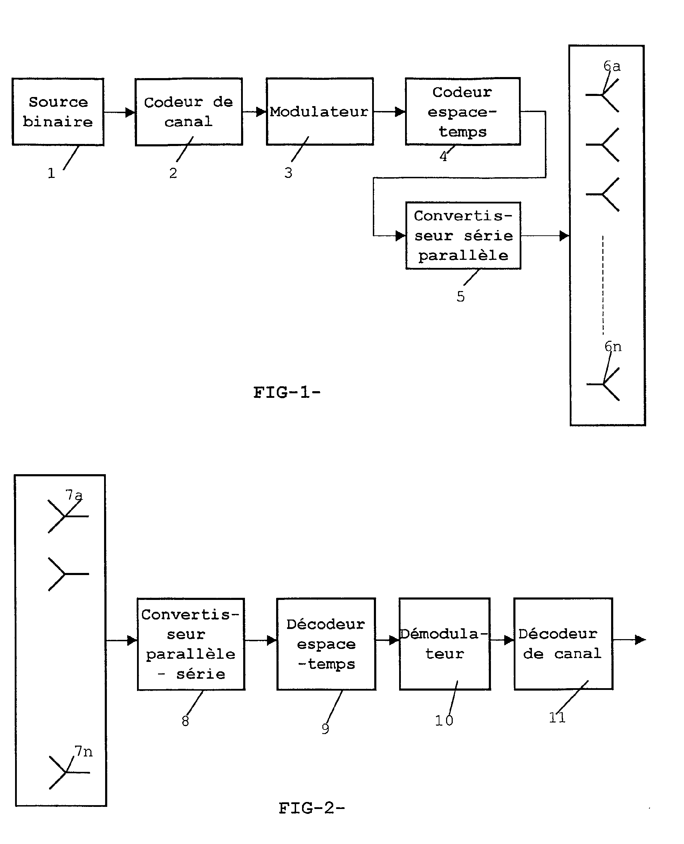

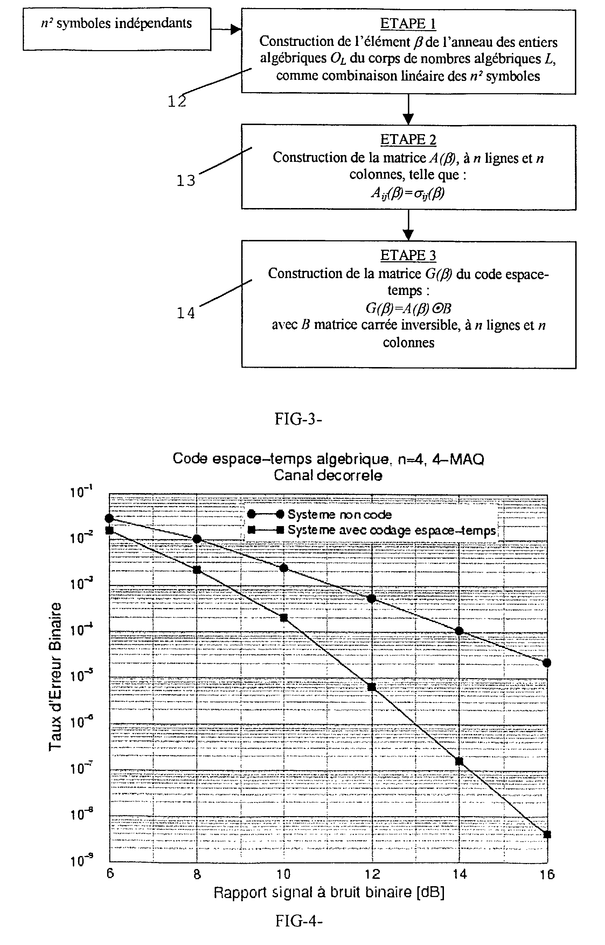

La figure 1 un schéma d'organisation générale de la partie émission d'un système de communication à antennes multiples en émission et en réception. La figure 2 un schéma d'organisation générale de la partie réception d'un système de communication à antennes multiples en émission et en réception. La figure 3 les différentes étapes du procédé selon l'invention mise sous la forme d'un organigramme. La figure 4 un graphique montrant les performances obtenues par une mise en oeuvre du procédé selon l'invention dans une configuration d'une constellation à quatre états de phase et quatre antennes d'émission et de réception.

Un schéma simplifié d'un système de communication à antennes multiples en émission et en réception auquel s'applique l'invention est représenté aux figures 1 et 2. Un tel système qui est souvent désigné par système MIMO pour Multiple Inputs Multiple Outputs dans la terminologie anglo-saxonne, comporte une partie émission et une partie réception.

La partie émission qui est représentée à la figure 1 est constituée d'une source de données binaires 1, d'un dispositif de codage de canal 2, d'un modulateur 3 qui associe à un ensemble fini de données binaires un symbole d'une constellation, d'un dispositif de codage espace-temps 4, d'un convertisseur série-parallèle 5 dont le rôle est de démultiplexer le train de données en sortie du codeur espace-temps en trains élémentaires transmis chacun par une antenne 6a à 6n d'émission distincte.

La partie réception comporte une ou plusieurs antennes de réception 7a à 7n, un convertisseur parallèle-série 8 dont le rôle est de multiplexer les trains de données issus des antennes de réception en un seul train de données, un décodeur espace-temps 9, un démodulateur 10 et un décodeur de canal 11.

Le procédé de codage espace-temps selon l'invention a pour but de transformer la diversité spatiale crée par les antennes d'émissions 6a à 6n et de réception 7a à 7n en diversité temporelle.

Pour la compréhension du procédé selon l'invention il est nécessaire de rappeler ci après quelques notions sur la théorie des nombres algébriques. Seules les définitions et résultats de la théorie des nombres algébriques strictement nécessaires pour la compréhension du procédé proposé par l'invention sont présentés. Dans ce qui suit:

- On considère Q[i] le corps des complexes rationnels, c'est-à-dire l'ensemble des nombres pouvant s'écrire sous la forme p+i.q, avec p et q des éléments du corps Q des nombres rationnels, et $i= \sqrt{-1}$.
- On désigne par Z[i] l'ensemble des entiers gaussiens, c'est-à-dire l'ensemble des nombres complexes pouvant s'écrire sous la forme a+i.b, avec a et b des éléments de l'ensemble Z des entiers relatifs. Z[i] est l'anneau des entiers du corps des complexes rationnels Q[i].

Dans ces conditions toute constellation de modulation d'amplitude en quadrature MAQ peut être vue comme un sous-ensemble fini de l'anneau des entiers gaussiens Z[i]. Pour des raisons de simplicité il est choisi de décrire le procédé de l'invention pour ce type de constellation MAQ. Il sera précisé plus tard comment le procédé de l'invention peut être étendu à d'autres types de constellations.

- On considère un corps K contenant le corps des complexes rationnels Q[i]. Un élément $\alpha$ du corps K est algébrique s'il est racine d'un polynôme monique à coefficients dans le corps des complexes rationnels Q[i]. Un polynôme monique est un polynôme unitaire, de degré minimal sur Q[i], admettant $\alpha$ pour racine. Ce polynôme, de degré minimal, est appelé polynôme minimal de l'élément $\alpha$. Si tous les éléments du corps K sont algébriques, le corps K est une extension algébrique du corps des complexes rationnels Q[i].

L'élément $\alpha$ de l'extension algébrique K sur Q[i] est un entier algébrique si les coefficients de son polynôme minimal sont dans l'anneau des entiers gaussiens Z[i]. L'ensemble des entiers algébriques de K est appelé l'anneau des entiers de K et est noté $O_K$.

Le degré n de l'extension algébrique K sur Q[i] est la dimension de l'extension algébrique K considérée comme un espace vectoriel sur Q[i]. Toute extension algébrique K de degré n fini sur le corps des complexes rationnels Q[i] est un corps de nombres algébriques.

Dans la suite de la description de l'invention, K désigne un corps de nombres algébriques.

Il existe un élément $\theta$ du corps de nombres algébriques K tel que les puissances $(1\ \theta\ ...\ \theta^{n-1})$ génèrent le corps de nombres algébriques K, et qui est appelé élément primitif du corps de nombres algébriques K. De plus, il existe un élément primitif $\theta$ qui est entier algébrique sur le corps de nombres algébriques K, c'est-à-dire dont le polynôme minimal est à coefficients dans l'anneau des entiers gaussiens Z[i].

- On note $(\theta_1\ \theta_2\ ...\ \theta_n)$ une base du corps de nombres algébriques K. $(\theta_1\ \theta_2\ ...\ \theta_n)$ est une base entière du corps de nombres algébriques K si l'ensemble $(\theta_1\ \theta_2\ ...\ \theta_n)$ est un système générateur de l'anneau des entiers algébriques $O_K$ du corps de nombres algébriques K.

Tout élément $\alpha$ de l'anneau des entiers $O_K$ du corps de nombres K peut alors s'écrire

$$\alpha = \sum_{i=1}^{n} b_i.\theta_i$$

où les éléments $b_i$, pour tout i allant de 1 à n, sont des éléments de l'anneau des entiers gaussiens Z[i]. Dans la suite de la description de l'invention, les éléments $b_i$, pour tout i allant de 1 à n, désignent chacun un symbole d'une constellation MAQ.

Soient deux corps K et K' contenant le corps des complexes rationnels Q[i], tout isomorphisme σ: **K→K'** tel que l'image de tout élément b du corps des complexes rationnels Q[i] par l'application σ soit l'élément b lui-même est appelé un Q[i]-isomorphisme. Si le corps K' est le corps des nombres complexes C, un Q[i]-isomorphisme σ du corps K dans le corps des complexes C est un plongement de K dans C.

Soit θ un élément primitif du corps de nombres algébriques K. Son polynôme minimal a exactement n racines distinctes $\theta_1, \theta_2, ..., \theta_n$ dans le corps de nombres algébriques K, où $\theta=\theta_1$. Il y a exactement n plongements du corps de nombres algébriques K dans le corps des nombres complexes C, et chaque plongement :

$$\sigma_i(\theta) = \theta_i$$

pour tout i allant de 1 à n, est complètement identifié par une racine $\theta_i$ du polynôme minimal de l'élément $\theta$ du corps de nombres algébriques K.

Enfin, soit $\alpha$ un élément du corps de nombres algébriques K, les images respectives de $\alpha$ par les n Q [i]-isomorphismes définis ci-dessus sont appelés les conjugués de $\alpha$.

La construction générique des codes espace-temps proposée par l'invention utilise les notions d'algèbre présentées jusqu'ici. L'invention, appliquée à la transmission de symboles d'une constellation MAQ, utilise des corps de nombres algébriques K tels que l'image d'un élément du sous-ensemble de l'anneau des entiers algébriques par l'un quelconque des plongements, appartiennent à l'anneau des entiers du corps dont K est une extension algébrique.

Toute constellation MAQ est vue comme un sous-ensemble fini de l'anneau des entiers gaussiens Z[i].

Soit K un corps de nombres algébriques de degré n sur Q[i], où n désigne le nombre d'antennes en émission dans le système de communication à antennes multiples. L'anneau des entiers algébriques du corps de nombres algébriques K est noté $O_K$. Enfin, ($\theta_1$ $\theta_2 \dots \theta_n$) désigne une base entière du corps de nombres algébriques K. Par conséquent, tout élément $\alpha$ de l'anneau des entiers algébriques $O_K$ peut s'écrire comme :

$$\alpha = \sum_{i=1}^{n} b_i . \theta_i$$

où les éléments $b_i$, pour tout i allant de 1 à n, sont des symboles d'une constellation MAQ, donc des éléments appartenant à l'anneau des entiers gaussiens Z[i].

Un élément $\alpha$ de l'anneau des entiers algébriques $O_K$ du corps de nombres algébriques K possède n conjugués sur le corps des complexes rationnels Q[i] définis chacun par un élément $\theta_i$ de la base entière ($\theta_1$ $\theta_2 \dots \theta_n$) du corps de nombres algébriques K.

Soit L un second corps de nombres algébriques contenant le corps de nombres algébriques K et de degré n sur K, n désignant le nombre d'antennes en émission dans le système de communication à antennes multiples. $O_L$ désigne l'anneau des entiers algébriques du corps de nombres algébriques L. On note ($\phi_1$ $\phi_2 \dots \phi_n$) une base entière du corps de nombres algébriques L. Tout élément $\beta$ de l'anneau des entiers algébriques $O_L$ peut donc s'écrire comme :

$$\beta = \sum_{j=1}^{n} \alpha_j . \phi_j$$

où les éléments $\beta_j$, pour tout j allant de 1 à n, sont des éléments de l'anneau des entiers algébriques $O_K$ du corps de nombres algébriques K.

Un élément $\beta$ de l'anneau des entiers algébriques $O_L$ du corps de nombres algébriques L possède n conjugués sur le corps de nombres algébriques K, définis chacun par un élément $\phi_j$ de la base entière ($\phi_1$, $\phi_2 \dots \phi_n$) du corps de nombres algébriques L.

Par le théorème de multiplicativité des degrés, le corps de nombres algébriques L est de degré $n^2$ sur le corps des complexes rationnels Q[i]. Et, puisque tout élément de $O_K$ est une combinaison linéaire d'éléments de l'anneau des entiers gaussiens Z[i] et que tout élément de $O_L$ est une combinaison linéaire d'éléments de l'anneau des entiers algébriques $O_K$, tout élément $\beta$ de l'anneau des entiers algébriques $O_L$ peut s'écrire comme :

$$\beta = \sum_{j=1}^{n} \left( \sum_{i=1}^{n} b_{ij} . \theta_i \right) . \phi_j$$

où les éléments $b_{ij}$, pour tout i allant de 1 à n et tout j allant de 1 à n, sont des symboles d'une constellation MAQ, donc des éléments appartenant à l'anneau des entiers gaussiens Z[i].

Par conséquent tout élément $\beta$ de l'anneau des entiers algébriques $O_L$ du corps de nombres algébriques L possède $n^2$ conjugués sur le corps des complexes rationnels Q[i]. Chacun des $n^2$ conjugués d'un élément $\beta$ quelconque de l'anneau des entiers algébriques $O_L$ du corps de nombres algébriques L peut être vu comme la composition d'un K-isomorphisme $\sigma_j$ de L dans K et d'un Q[i]-isomorphisme $\sigma_i$ de K dans le corps des nombres complexes C, pour tout i allant de 1 à n et pour tout j allant de 1 à n. Soit $\sigma_{ij} = \sigma_j \circ \sigma_i$ la composition des applications $\sigma_j$ et $\sigma_i$.

Chacun des $n^2$ conjugués d'un élément $\beta$ quelconque de l'anneau des entiers algébriques $O_L$ du corps de nombres algébriques L correspond à l'image de $\beta$ par l'une des $n^2$ applications $\sigma_{ij}$, pour tout i allant de 1 à n et tout j allant de 1 à n.

L'invention propose à partir des outils tirés de la théorie des corps de nombres algébriques la construction générique suivante pour la matrice de code espace-temps. La matrice de code espace-temps désigne la matrice, à n lignes et n colonnes, dont les coefficients d'une ligne i sont les n signaux transmis séparément par chacune des n antennes en émission à l'instant d'émission t=i. Par conséquent, la colonne j contient les signaux transmis par l'antenne d'émission j de l'instant d'émission t=1 à l'instant d'émission t=n.

Le procédé proposé par l'invention et décrit par la figure 3 pour la construction des codes espace-temps consiste dans une première étape 12 à construire dans l'anneau des entiers algébriques $O_L$ du corps de nombres algébriques L l'élément β comme la combinaison linéaire des $n^2$ symboles de la constellation MAQ à transmettre dans la base entière de l'anneau des entiers $O_L$ du corps de nombres algébriques L sur le corps des nombres complexes rationnels Q[i].

Une deuxième étape 13 consiste à construire une matrice A à n lignes et n colonnes, dont on note $A_{ij}$, pour tout i allant de 1 à n et j allant de 1 à n, les $n^2$ coefficients. L'invention propose de prendre :

$$A_{ij} = \sigma_{ij}(\beta).$$

Enfin, une troisième étape 14 consiste à construire G la matrice du code espace-temps. La ligne i de la matrice du code espace-temps contient les n signaux transmis séparément par chacune des n antennes en émission à l'instant t=i. Dans cette configuration, la colonne j contient les signaux transmis par l'antenne d'émission j de l'instant t=1 à l'instant t=n. La configuration transposée est équivalente, c'est-à-dire celle où la ligne i de la matrice du code espace-temps contient les n signaux transmis par l'antenne d'émission i de l'instant t=1 à l'instant t=n, et la colonne j contient les n signaux transmis à l'instant j séparément par chacune des n antennes en émission. Par extension, toute matrice équivalente, au sens mathématique, à la matrice G(β), ainsi que toute matrice obtenue comme bijection quelconque de la matrice G(β) est partie intégrante de l'invention.

Suivant l'invention la construction de la matrice du code espace-temps associée à l'élément β de l'anneau des entiers $O_L$ du corps de nombres algébriques L est définie par la relation:

$$G(\beta) = A(\beta) \odot B$$

où B désigne toute matrice inversible à n lignes et n colonnes et $\odot$ désigne le produit de Hadamard terme à terme, c'est-à-dire que chaque coefficient $G_{ij}$ de la matrice du code espace-temps est le produit du coefficient $A_{ij}$ par le coefficient $B_{ij}$, pour tout i allant de 1 à n et pour tout j allant de 1 à n.

Le procédé de construction de codes espace-temps selon l'invention qui vient d'être décrit est générique quelque soit le nombre et la configuration d'antennes du système de communication à antennes multiples en émission et en réception, et permet d'exploiter la totalité de la diversité spatiale offerte par le canal à entrées et sorties multiples du système de communication à antennes multiples. L'exploitation maximale de la diversité spatiale offerte par le système de communication à antennes multiples est assurée d'une part par la construction de la matrice A(β) et d'autre part par le produit de Hadamard entre la matrice A(β) et la matrice inversible B. Enfin, le procédé de construction de codes espace-temps décrit par l'invention permet, pour une constellation fixée, d'avoir une efficacité maximale, en ce sens que le système de communication à antennes multiples en émission et en réception transmet n symboles indépendants de la constellation utilisée à chaque instant d'émission, où n désigne le nombre d'antennes en émission du système de communication à antennes multiples.

Le procédé de construction des codes espace-temps développé par l'invention s'applique également à toute constellation dont les signaux peuvent s'écrire sous la forme p + i.q, p et q étant des éléments de l'ensemble des nombres rationnels Q, car tout sous-ensemble fini de l'ensemble des nombres rationnels Q peut être transformé en un sous-ensemble fini de nombres entiers par multiplication par le plus petit commun multiple des éléments du sous-ensemble. Par conséquent le procédé de construction de codes espace-temps s'applique en particulier aux constellations des modulations de phase MDP à 2, 4 et 8 états.

Les codes espace-temps algébriques issus de la construction proposée par l'invention sont linéaires. Il est donc possible de leur associer des techniques de décodage simples issues de l'algèbre linéaire. La propriété de linéarité des codes espace-temps algébriques issus de la construction proposée par l'invention est évidente, car chaque coefficient de la matrice G(β) du code espace-temps est une combinaison linéaire des symboles de la constellation à transmettre. Une possibilité pour décoder les codes espace-temps algébriques issus de la construction proposée par l'invention est l'algorithme de décodage de réseaux de points ou algorithme de décodage par sphères développé à l'Ecole Nationale Supérieure de Télécommunications (ENST) de Paris et publié par MM. Viterbo et Boutros sous le titre "A universal lattice code decoder for fading channels" dans la revue IEEE Transactions on Information Theory, Juillet 1999.

L'algorithme de décodage par sphères est un algorithme de décodage de réseau de points. Il est basé sur une recherche, parmi les points du réseau situés à l'intérieur d'une sphère, de rayon fixé, centrée sur le signal reçu, du point du réseau le plus proche du signal reçu. Ceci garantit que seul les points du réseau situés à une distance au carré inférieure ou égale au rayon de la sphère seront considérés dans la recherche. D'autre part, ceci garantit également de trouver le point du réseau le plus proche du signal reçu, et donc des performances optimales selon le critère, en communications numériques, du maximum de vraisemblance, pour une complexité très inférieure à celle que couterait une recherche exhaustive parmi tous les points du réseau. La complexité de cet algorithme de décodage est fonction du nombre d'antennes en émission du système à antennes multiples, mais elle présente l'avantage important d'être indépendante du nombre de signaux dans la constellation à laquelle appartiennent les symboles à transmettre.

L'analogie du système à antennes multiples utilisant des codes espace-temps proposés par l'invention avec les réseaux de points est la suivante. L'ensemble des $n^2$ symboles transmis sur n instants d'émission par le système à n antennes multiples en émission peut être vu comme un point d'un réseau de dimension $n^2$ et de matrice génératrice égale à la matrice générant le code espace-temps considéré. Les lignes de la matrice génératrice du réseau constituent une base de ce réseau et les symboles de la constellation à transmettre déterminent les coordonnées du point du réseau dans cette base.

Le procédé de construction de codes espace-temps algébriques proposée par l'invention est également directement utilisable pour la construction de codes espace-temps algébriques offrant des efficacités non maximales, c'est-à-dire pour des configurations où le système à antennes multiples en émission et en réception, possédant n antennes en émission, transmet à chaque instant d'émission un nombre de symboles, indépendants, de la constellation utilisée inférieur au nombre n d'antennes en émission du système de communication à antennes multiples.

Dans cette configuration, les codes espace-temps algébriques à efficacité non maximale issus de la construction proposée par l'invention conservent leurs propriétés de généricité, de linéarité, d'exploitation de la diversité spatiale maximale offerte par le canal du système de communication à antennes multiples en émission et en réception.

Un procédé peut consister à répéter plusieurs fois les mêmes symboles à transmettre dans l'expression de l'élément β, appartenant à l'anneau des entiers algébriques $O_L$ du corps de nombres algébriques L, dans une base entière du corps de nombres algébriques L dans le corps des complexes rationnels Q[i]. D'autres procédés sont envisageables.

Pour illustrer la description de l'invention, un exemple est donné pour un système de communication comportant n=4 antennes en émission. Pour cet exemple, des extensions cyclotomiques sont considérées. Soient :

$$\theta = e^{i \cdot \frac{\pi}{8}} \text{ et } \phi = e^{i \cdot \frac{\pi}{32}},$$

et soient :

$$K = Q[\theta] \text{ et } L = Q[\phi].$$

K est une extension cyclotomique de degré n=4 sur Q[i] et L est une extension cyclotomique de degré n=4 sur K et une extension cyclotomique de degré $n^2=16$ sur Q

[i].

La matrice B est choisie comme la matrice de transformée de Fourier en dimension n=4, qui est une matrice inversible.

Dans le cas des extensions cyclotomiques, une base entière, sur Z[i], de l'anneau des entiers algébriques $O_K$ du corps de nombres algébriques K est :

$$(1 \ \theta \ \theta^2 \ \theta^3)$$

et une base entière, sur Z[i], de l'anneau des entiers algébriques $O_L$ du corps de nombres algébriques L est :

$$(1 \ \phi \ \phi^2 \ \phi^3).$$

Un élément β de l'anneau des entiers algébriques $O_L$ s'écrit alors :

$$\beta = \sum_{j=0}^{n-1} \left( \sum_{i=0}^{n-1} b_{ij} . \theta^i \right) \phi^j$$

où les éléments $b_{ij}$, pour tout i allant de 1 à n et tout j allant de 1 à n, sont des symboles d'une constellation MAQ. Les éléments $\sigma_{ij}(\beta)$ associés à chaque élément β de $O_L$ sont construits comme :

$$\sigma_{ij}(\beta) = \sum_{i=0}^{n-1} \sum_{j=0}^{n-1} b_{ij} . \theta^i . \phi^j \ .$$

Ce code espace-temps est décodé en utilisant l'algorithme de décodage par sphères. La courbe de performances présentée sur la figure 4 présente les performances du système de communication, à n=4 antennes en émission, avec codage espace-temps comparé au même système sans codage espace-temps, pour une constellation MAQ à 4 états et n=4 antennes en réception. Les performances sont présentées en terme de taux d'erreur binaire en fonction du rapport signal à bruit binaire.

La courbe des performances permet de mettre en évidence plusieurs intérêts de la solution de codage espace-temps proposée par l'invention. Un premier intérêt est d'obtenir de faibles taux d'erreur pour des rapports signal à bruit très raisonnables. Un deuxième intérêt réside dans la solution de décodage par sphères appliquée en réception des codes espace-temps proposés par l'invention. En effet, l'algorithme de décodage par sphères permet de décider le symbole de la constellation émis, sans passer par une décomposition binaire du symbole. En d'autres termes, l'association de l'algorithme de décodage par sphères aux codes espace-temps de l'invention permet de régénérer les symboles d'une constellation, en s'affranchissant des étapes de décodage binaire de l'information émise. Par conséquent, les codes espace-temps de l'invention, par leur performances en terme de taux d'erreurs, et l'algorithme de décodage par sphères, par sa décision au niveau symbole, peuvent permettre d'assurer une fonction de répétition régénératrice des symboles. Par conséquent, une application des codes espace-temps de l'invention associés à l'algorithme de décodage par sphères est leur utilisation pour des fonctions de routage de l'information entre la partie émission d'un premier système de communication à antennes multiples et la partie réception d'un second système de communication à antennes multiples, en passant éventuellement par plusieurs systèmes de communication à antennes multiples intermédiaires. Chaque système de communication à antennes multiples décode et régénère l'information au niveau symbole, en s'affranchissant des étapes de décodage binaire de l'information, avant de la retransmettre avec des taux d'erreurs faibles pour des rapports signal à bruit raisonnables. D'autre part, le fait de décider au niveau symbole permet de s'affranchir du protocole de communication, à la seule contrainte de transmettre des symboles d'une constellation dont les éléments sont dans Z[i] ou dans Q[i]. En effet l'algorithme de décodage par sphères nécessite d'avoir des symboles transmis à composantes entières, donc des symboles appartenant à Z[i], ou des symboles appartenant à Q[i] puisque ces symboles peuvent être transformés en symboles de Z[i] par multiplication par le plus petit commun multiple des composantes de ces symboles.

**Revendications**

1. Procédé de construction de codes espace-temps pour la transmission d'une constellation de n signaux appartenant à une constellation de signaux modulés en amplitude ou en phase, chaque signal de la constellation étant représentatif d'un symbole à transmettre, au moyen d'un système de communication à antennes multiples comprenant n antennes d'émission (6a,..6n) et n antennes de réception (7a,..7n) le nombre d'antennes d'émission étant égale au nombre d'antennes de réception, **caractérisé en ce qu'**il consiste:

   - à sélectionner les corps de nombres adaptés pour la dimension du système considéré, c'est-à-dire pour le nombre n d'antennes en émission du système de communication à antennes multiples,

   - à construire (12) l'élément $\beta$ de l'anneau des entiers algébriques $O_L$ du corps des nombres algébriques L comme combinaison linéaire, dans une base entière du corps de nombres algébriques L dans le corps des complexes rationnels Q[i], des $n^2$ symboles, indépendants, de la constellation à transmettre sur n instants d'émission par les n antennes d'émission (6a,.. 6n) du système de communication à antennes multiples,

   - à construire (12) les $n^2$ conjugués dans Q[i] de l'élément $\beta$, appartenant à l'anneau des entiers algébriques $O_L$ du corps de nombres algébriques L, comme images respectives par chacun des $n^2$ plongements du corps de nombres algébriques L dans le corps des complexes rationnels Q[i] de l'élément $\beta$, appartenant à l'anneau des entiers algébriques $O_L$ du corps de nombres algébriques L,

   - à construire (13) une matrice A($\beta$), à n lignes et n colonnes, telle que le coefficient $A_{ij}(\beta)$, pour tout i allant de 1 à n et pour tout j allant de 1 à n, soit l'image par le plongement noté $\sigma_{ij}$ du corps de nombres algébriques L dans le corps des complexes rationnels Q[i] de l'élément $\beta$ appartenant à l'anneau des entiers algébriques $O_L$ du corps de nombres algébriques L, où $\sigma_{ij}$ désigne la composition des applications $\sigma_i$ et $\sigma_j$, où l'on note respectivement par $\sigma_j$, pour tout j allant de 1 à n, les n K-isomorphismes du corps de nombres algébriques L dans le corps de nombres algébriques K et $\sigma_i$, pour tout i allant de 1 à n, les Q[i]-isomorphismes du corps de nombres algébriques K dans le corps des complexes rationnels Q[i],

   - à choisir (14) une matrice B, à n lignes et n colonnes, inversible,

   - et à construire (14) la matrice du code espace-temps G($\beta$) en effectuant le produit de Hadamard de la matrice A($\beta$) par la matrice inversible B.

2. Procédé selon la revendication 1 **caractérisé en ce que** la ligne i, pour tout i allant de 1 à n, de la matrice de code G($\beta$) contient les n signaux à transmettre séparément, à l'instant t=i, par chacune des n antennes en émission (6a,..6n).

3. Procédé selon la revendication 1 **caractérisé en ce que** la colonne j, pour tout j allant de 1 à n, de la matrice de code G($\beta$) contient les n signaux à transmettre séparément, à l'instant t=j, par chacune des n antennes en émission (6a,..6n).

4. Procédé selon l'une quelconque des revendications 1 à 3 **caractérisé en ce que** la matrice inversible B est une matrice de transformée de Fourier de dimension n.

**5.** Procédé selon l'une quelconque des revendications 1 à 4 **caractérisé en ce que** la matrice G($\beta$) peut être remplacée par toute matrice équivalente, au sens mathématique, ou par toute matrice obtenue comme bijection quelconque de la matrice G($\beta$).

**6.** Procédé selon l'une quelconque des revendications 1 à 5 **caractérisé en ce que** chaque constellation de signaux est un sous-ensemble fini du corps des complexes rationnels Q[i].

**7.** Utilisation du procédé construit selon l'une quelconque des revendication 1 à 6 à des systèmes de communication radioélectriques numériques sans fil.

**8.** Utilisation du procédé selon l'une quelconque des revendications 1 à 7 au multiplexage spatial de données dans le but d'apporter un facteur n en débit, mais aussi dans le but de profiter d'un facteur n en diversité spatiale apportée par le procédé de l'invention pour un système de communication équipé de n antennes (6a,... 6n) en émission.

**9.** Utilisation du procédé selon l'une quelconque des revendications 1 à 7 au routage de l'information entre systèmes de communication à antennes multiples (6a,..6n;7a,..7n), en restant au niveau symbole pour la régénération de l'information en chaque système de communication à antennes multiples intermédiaires, permettant de s'affranchir des étapes de décodage binaire de l'information et par conséquent de la connaissance du codage de canal binaire du protocole de communication employé.

**10.** Utilisation du procédé selon l'une quelconque des revendications 1 à 5, conjointement avec un procédé de décodage par exécution d'un algorithme de décodage par sphères.

## FIG-1-

```
┌──────────┐   ┌──────────┐   ┌──────────┐   ┌──────────┐
│  Source  │→  │ Codeur de│→  │Modulateur│→  │  Codeur  │
│ binaire  │   │  canal   │   │          │   │ espace-  │
│          │   │          │   │          │   │  temps   │
└──────────┘   └──────────┘   └──────────┘   └──────────┘
     1              2              3              4
```

```
┌──────────┐
│Convertis-│
│seur série│
│parallèle │
└──────────┘
     5
```

6a

6n

## FIG-2-

7a

7n

```
┌──────────┐   ┌──────────┐   ┌──────────┐   ┌──────────┐
│Convertis-│   │ Décodeur │   │Démodula- │   │ Décodeur │
│  seur    │→  │ espace   │→  │  teur    │→  │ de canal │
│parallèle │   │ -temps   │   │          │   │          │
│ - série  │   │          │   │          │   │          │
└──────────┘   └──────────┘   └──────────┘   └──────────┘
     8              9             10             11
```

10

```
┌─────────────────────────────┐      ┌─────────────────────────────────────────┐
│  n² symboles indépendants   │─────▶│              ETAPE 1                      │
└─────────────────────────────┘      │  Construction de l'élément β de l'anneau  │
                                      │  des entiers algébriques O_L du corps de  │
                                      │  nombres algébriques L, comme combinaison │
                                      │  linéaire des n² symboles                 │
                           12         └─────────────────────────────────────────┘
                                                        │
                                                        ▼
                                      ┌─────────────────────────────────────────┐
                                      │              ETAPE 2                      │
                                      │  Construction de la matrice A(β), à n     │
                   13                 │  lignes et n colonnes, telle que :        │
                                      │           A_{ij}(β)=σ_{ij}(β)             │
                                      └─────────────────────────────────────────┘
                                                        │
                                                        ▼
                                      ┌─────────────────────────────────────────┐
                                      │              ETAPE 3                      │
                                      │  Construction de la matrice G(β) du code  │
                                      │  espace-temps :                           │
                   14                 │           G(β)=A(β) ⊙ B                   │
                                      │  avec B matrice carrée inversible, à n    │
                                      │  lignes et n colonnes                     │
                                      └─────────────────────────────────────────┘
```

FIG-3-

Code espace-temps algébrique, n=4, 4-MAQ
Canal decorrele

FIG-4-

**Office européen
des brevets**

**RAPPORT DE RECHERCHE EUROPEENNE**

Numéro de la demande

EP 02 36 4005

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | HASSIBI B ET AL: "Multiple antennas and representation theory" PROCEEDINGS OF THE 2000 IEEE INTERNATIONAL SYMPOSIUM ON INFORMATION THEORY. ISIT 2000. SORRENTO, ITALY, JUNE 25 – 30, 2000, IEEE INTERNATIONAL SYMPOSIUM ON INFORMATION THEORY, NEW YORK, NY: IEEE, US, 25 juin 2000 (2000-06-25), page 337 XP002170444 ISBN: 0-7803-5858-9 * page 35, ligne 17 – ligne 20 * * page 36, ligne 3 – ligne 10 * * page 36, ligne 17 – ligne 21 * | 1-4,7-10 | H04L1/06 |
| A | TAROKH V ET AL: "Space-time codes for high data rate wireless communication: performance criterion and code construction" IEEE TRANSACTIONS ON INFORMATION THEORY, IEEE INC. NEW YORK, US, vol. 44, no. 2, 1 mars 1998 (1998-03-01), pages 744-765, XP002089112 ISSN: 0018-9448 * abrégé; figure 19 * * page 748, colonne de gauche, ligne 46 – ligne 54 * * page 755, colonne de gauche, ligne 1 – ligne 10 * * page 755, colonne de droite, ligne 7 – colonne de gauche, ligne 4 * | 1-4,7-10 | DOMAINES TECHNIQUES RECHERCHES (Int.Cl.7) H04L |

-/--

Le présent rapport a été établi pour toutes les revendications

| Lieu de la recherche | Date d'achèvement de la recherche | Examinateur |
|---|---|---|
| LA HAYE | 15 mai 2002 | Papantoniou, A |

Office européen
des brevets

**RAPPORT DE RECHERCHE EUROPEENNE**

Numéro de la demande

EP 02 36 4005

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| D,A | GUEY J-C ET AL: "SIGNAL DESIGN FOR TRANSMITTER DIVERSITY WIRELESS COMMUNICATION SYSTEMS OVER RAYLEIGH FADING CHANNELS" IEEE TRANSACTIONS ON COMMUNICATIONS, IEEE INC. NEW YORK, US, vol. 47, no. 4, avril 1999 (1999-04), pages 527-537, XP000860508 ISSN: 0090-6778 * abrégé * * page 532, colonne de droite, ligne 20 - ligne 38 * | 1-4,7-10 | |
| | | | **DOMAINES TECHNIQUES RECHERCHES (Int.Cl.7)** |

Le présent rapport a été établi pour toutes les revendications

| Lieu de la recherche | Date d'achèvement de la recherche | Examinateur |
|---|---|---|
| LA HAYE | 15 mai 2002 | Papantoniou, A |

EPO FORM 1503 03.82 (P04C02)